# EUROPEAN PATENT APPLICATION

(11) **EP 4 651 067 A1**
(43) Date of publication of application: **19.11.2025**
(21) Application number: 24759967.3
(22) Date of filing: 16.01.2024
(51) Int. Cl.: G06Q 50/06

(54) **OPERATION MODE SWITCHING ASSISTANCE DEVICE, ECONOMIC EFFICIENCY SIMULATOR, FUEL PRODUCTION SYSTEM, OPERATION MODE SWITCHING ASSISTANCE METHOD, AND OPERATION MODE SWITCHING ASSISTANCE PROGRAM**

(30) Priority: 22.02.2023 JP 2023026522
(71) Applicant: Mitsubishi Heavy Industries, Ltd., Tokyo 100-8332 (JP)
(72) Inventor: SHINOZAKI, Kohei, Tokyo 100-8332 (JP); DOMOTO, Kazuhiro, Tokyo 100-8332 (JP); YAMAUCHI, Yasuhiro, Tokyo 100-8332 (JP)
(74) Representative: Hoffmann Eitle
(86) International application number: PCT/JP2024/001013
(87) International publication number: WO 2024/176660

(57) **Abstract**

Provided are an operation mode switching assistance device that can switch between options (operation modes) in order to increase a profit, an economic efficiency simulator, a fuel production system, an operation mode switching assistance method, and an operation mode switching assistance program. An operation mode switching assistance device (50) of a fuel production system (1) for producing fuel by combining a biomass-fired power generation facility (10), a water electrolyzer (20), and a fuel production reaction device (30) acquires a selling price of electricity generated by the biomass-fired power generation facility (10) and a selling price of the fuel produced by the fuel production system (1) and controls switching between an electricity selling mode in which electricity is sold and a fuel production mode in which fuel is produced on the basis of a result of a comparison between the electricity selling price and the fuel selling price.

## Description

### Technical Field

The present disclosure relates to an operation mode switching assistance device, an economic efficiency simulator, a fuel production system, an operation mode switching assistance method, and an operation mode switching assistance program.

### Background Art

Toward the realization of a carbon-neutral society, there is an increasing need for producing sustainable aviation fuel (SAF) especially in the aviation industry. For example, Patent Documents 1 and 2 disclose an SAF production system by using a thermal power generation, a water electrolyzer, and a methanation device (an FT synthesis device which is a device for synthesizing liquefied hydrocarbon using a Fischer-Tropsch (FT) method). Patent Document 2 discloses that carbon dioxide discharged from a biomass refinery device is recovered and used.

### Citation List

### Patent Literature

Patent Document 1: JP 2020-33284 A
Patent Document 2: JP 2020-525638 A

### Summary of Invention

### Technical Problem

However, in the inventions of Patent Documents 1 and 2, biomass-fired power generation using biomass is not considered.

In recent years, biomass-fired power generation using biomass as well as coal as fuel for thermal power generation has been increasing. On the other hand, due to recent power system innovations, transaction amounts in wholesale electricity markets have been increasing, and the fluctuation range of wholesale electricity prices has been increasing accordingly. Depending on the season or the time zone, benefits to business operators may increase by earning electricity selling incomes from biomass-fired power generation, rather than by producing SAF using electricity generated by biomass-fired power generation. That is, the business operators can choose from two options of selling the electricity from the biomass-fired power generation or using the electricity for SAF production.

However, it is difficult for the business operators to appropriately choose an option (an operation mode) that maximizes a profit based on information such as an electricity selling unit price, an electricity purchasing unit price, a biomass unit price, and an SAF price.

The present disclosure has been made in view of such circumstances, and an object thereof is to provide an operation mode switching assistance device that can switch between options (operation modes) in order to increase a profit, an economic efficiency simulator, a fuel production system, an operation mode switching assistance method, and an operation mode switching assistance program.

### Solution to Problem

In order to solve the above problem, an operation mode switching assistance device, an economic efficiency simulator, a fuel production system, an operation mode switching assistance method, and an operation mode switching support program of the present disclosure employ the following means.

An operation mode switching assistance device of the present disclosure is an operation mode switching assistance device for a fuel production system for producing fuel by combining a biomass-fired power generation facility, a water electrolyzer, and a fuel production reaction device. The operation mode switching assistance device acquires an electricity selling price of electricity generated by the biomass-fired power generation facility and a fuel selling price of the fuel produced by the fuel production system and controls switching between an electricity selling mode in which the electricity is sold and a fuel production mode in which the fuel is produced on the basis of a result of comparison between the electricity selling price and the fuel selling price.

An economic efficiency simulator of the present disclosure is an economic efficiency simulator for a fuel production system for producing fuel by combining a biomass-fired power generation facility, a water electrolyzer, and a fuel production reaction device. The economic efficiency simulator determines, based on input information including an electricity selling price of electricity generated by the biomass-fired power generation facility and a fuel selling price of the fuel produced by the fuel production system, an electricity selling amount in an electricity selling mode in which the electricity is sold and a fuel production amount in a fuel production mode in which the fuel is produced.

A fuel production system of the present disclosure includes a biomass-fired power generation facility, a water electrolyzer, a fuel production reaction device, and the operation mode switching assistance device described above and produces fuel.

An operation mode switching assistance method of the present disclosure is an operation mode switching assistance method for a fuel production system for producing fuel by combining a biomass-fired power generation facility, a water electrolyzer, and a fuel production reaction device. The operation mode switching assistance method to be executed by a computer includes: acquiring an electricity selling price of electricity generated by the biomass-fired power generation facility and a fuel selling price of fuel produced by the fuel production system; and controlling switching between an electricity selling mode in which the electricity is sold and a fuel production mode in which the fuel is produced on the basis of a result of comparison between the electricity selling price and the fuel selling price.

An operation mode switching assistance program of the present disclosure causes a computer to execute the operation mode switching assistance method described above.

### Advantageous Effects of Invention

The present disclosure can choose between the electricity selling mode and the fuel production mode by comparing a case in which the electricity generated by the biomass-fired power generation facility is sold with a case in which the fuel is produced by the fuel production system.

### Brief Description of Drawings

FIG. 1 is a diagram illustrating a fuel production system in some embodiments of the present disclosure.
FIG. 2 is a diagram illustrating an example of a hardware configuration of an operation mode switching assistance device in some embodiments of the present disclosure.
FIG. 3 is a diagram illustrating a fuel production system in an electricity selling mode in some embodiments of the present disclosure.
FIG. 4 is a diagram illustrating a fuel production system in a SAF production mode in some embodiments of the present disclosure.
FIG. 5 is a diagram illustrating an information flow in some embodiments of the present disclosure.
FIG. 6 is a diagram illustrating an economic efficiency simulator in some embodiments of the present disclosure.
FIG. 7 is a diagram illustrating a control flow of an operation mode switching assistance device in some embodiments of the present disclosure.
FIG. 8 is a diagram illustrating computation of an economic efficiency simulator in some embodiments of the present disclosure.
FIG. 9 is a diagram illustrating a fuel production system including a stack in some embodiments of the present disclosure.
FIG. 10 is a diagram illustrating a fuel production system in some embodiments of the present disclosure.
FIG. 11 is a diagram illustrating a fuel production system in an electricity selling mode in some embodiments of the present disclosure.
FIG. 12 is a diagram illustrating a fuel production system in a SAF production mode in some embodiments of the present disclosure.
FIG. 13 is a diagram illustrating a business flow in some embodiments of the present disclosure.
FIG. 14 is a diagram illustrating an economic efficiency simulator in some embodiments of the present disclosure.
FIG. 15 is a diagram illustrating a control flow of an operation mode switching assistance device in some embodiments of the present disclosure.
FIG. 16 is a diagram illustrating computation of an economic efficiency simulator in some embodiments of the present disclosure.
FIG. 17 is a diagram illustrating a fuel production system in some embodiments of the present disclosure.
FIG. 18 is a diagram illustrating a fuel production system in an operation mode A in some embodiments of the present disclosure.
FIG. 19 is a diagram illustrating a fuel production system in an operation mode B in some embodiments of the present disclosure.
FIG. 20 is a diagram illustrating a fuel production system in an operation mode C in some embodiments of the present disclosure.
FIG. 21 is a diagram illustrating a business flow in some embodiments of the present disclosure.
FIG. 22 is a diagram illustrating an economic efficiency simulator in some embodiments of the present disclosure.
FIG. 23 is a diagram illustrating a control flow of an operation mode switching assistance device in some embodiments of the present disclosure.
FIG. 24 is a diagram illustrating computation of an economic efficiency simulator in some embodiments of the present disclosure.
FIG. 25 is a diagram illustrating correlation between an electricity generation amount and a profit of a fuel production system in some embodiments of the present disclosure.

### Description of Embodiments

Hereinafter, embodiments of an operation mode switching assistance device, an economic efficiency simulator, a fuel production system, an operation mode switching assistance method, and an operation mode switching assistance program according to the present disclosure will be described with reference to the drawings.

### First Embodiment

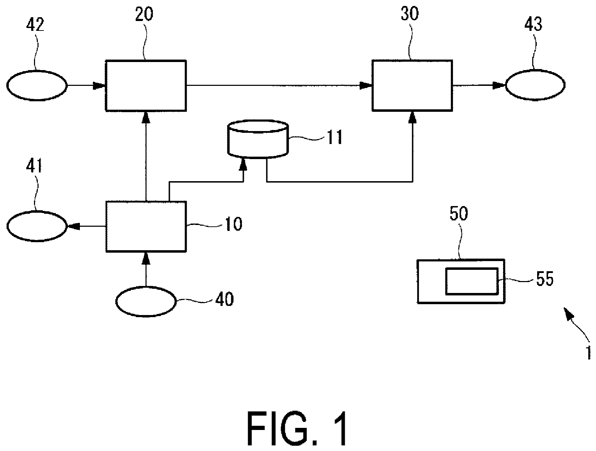

A first embodiment of the present disclosure will be described below by using FIG. 1.

FIG. 1 is a diagram illustrating a fuel production system in some embodiments of the present disclosure.

As illustrated in FIG. 1, a fuel production system 1 includes a biomass-fired power generation facility 10, a water electrolyzer 20, an FT synthesis device (fuel production reaction device) 30, and an operation mode switching assistance device 50. The fuel production system 1 produces fuel.

The biomass-fired power generation facility 10 is a thermal power generation facility using biomass 40 as fuel. Electricity generated by the biomass-fired power generation facility 10 is supplied to the water electrolyzer 20 and/or sold as electricity for selling 41. At least part of carbon dioxide (CO2) discharged during electricity generation in the biomass-fired power generation facility 10 is recovered by a CO2 recovery device (not illustrated) provided at the biomass-fired power generation facility 10 and fed to the FT synthesis device 30.

The fuel production system 1 may include a CO2 tank 11 that stores the carbon dioxide recovered from the biomass-fired power generation facility 10. When the fuel production system 1 does not include the CO2 tank 11, the carbon dioxide discharged from the biomass-fired power generation facility 10 is directly fed to the FT synthesis device 30. The CO2 tank 11 may be a liquefied CO2 tank or may be a pressurized CO2 gas holder.

The water electrolyzer 20 electrolyzes water or steam by using electricity from the biomass-fired power generation facility 10 and/or external electricity 42 supplied from the outside to generate hydrogen (H2) and oxygen (O2). The fuel production system 1 may include an H2 tank (not illustrated) that stores hydrogen generated by the water electrolyzer 20.

Preferably, inexpensive electricity such as surplus electricity or midnight electricity is used as the external electricity 42 for supplying electricity to the water electrolyzer 20. Further, a power storage device (not illustrated) that stores the external electricity 42 and/or a power storage device (not illustrated) that stores electricity of the biomass-fired power generation facility 10 may be provided. By providing the power storage device, inexpensive external electricity such as surplus electricity or midnight electricity, or surplus electricity of the biomass-fired power generation facility 10 can be stored in a time zone or the like during which the water electrolyzer 20 does not require electricity, and thus the fuel production system 1 can use inexpensive electricity. The power storage device may be provided at the biomass-fired power generation facility 10 or may be provided at the water electrolyzer 20. The power storage device may be provided between the biomass-fired power generation facility 10 and the water electrolyzer 20, or may be provided between the external electricity 42 and the water electrolyzer 20.

The FT synthesis device 30 is a device that synthesizes liquefied hydrocarbon by using the Fischer-Tropsch method (FT method). The FT method has a series of processes for synthesizing liquefied hydrocarbon from carbon monoxide and hydrogen by using catalytic reaction, where a compound of iron or cobalt is generally used as a catalyst. The FT method is intended to produce synthetic oil or synthetic fuel as a substitute for petroleum. In the present disclosure, liquefied hydrocarbon (CnH2n+2) is synthesized from hydrogen generated by the water electrolyzer 20 and carbon dioxide discharged from the biomass-fired power generation facility 10. The FT synthesis device 30 in the present embodiment includes, for example, a reverse shift reaction catalyst, and in reverse shift reaction, carbon monoxide and water are produced from carbon dioxide and hydrogen. Liquefied hydrocarbon synthesized from biomass-derived carbon dioxide is used as, for example, sustainable aviation fuel (SAF) which is carbon-neutral fuel.

The operation mode switching assistance device 50 controls switching between operation modes of the fuel production system 1. The operation mode switching assistance device 50 may include an economic efficiency simulator 55 described below.

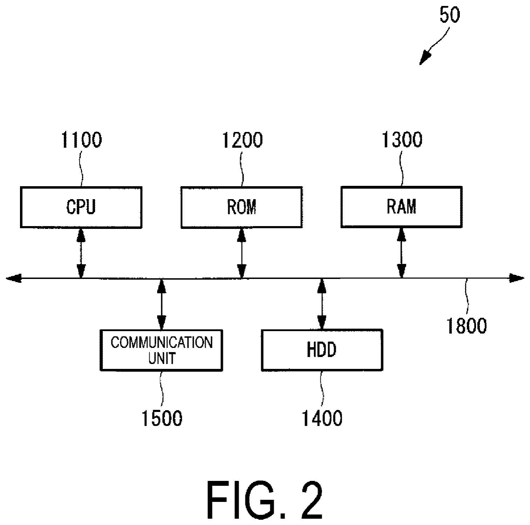

FIG. 2 is a diagram illustrating an example of a hardware configuration of an operation mode switching assistance device in some embodiments of the present disclosure.

As illustrated in FIG. 2, the operation mode switching assistance device 50 is a computer system (computing system) and includes, for example, a central processing unit (CPU: a processor) 1100, a secondary storage (ROM: a memory) 1200, a main memory (RAM) 1300, a hard disk drive (HDD) 1400 as a large capacity storage, and a communication unit 1500 for connecting to a network or the like. A solid state drive (SSD) may be used as the large capacity storage. These components are connected via a bus 1800.

The CPU 1100 controls the entire operation mode switching assistance device 50 by an operating system (OS) stored in the secondary storage 1200 connected via the bus 1800 and executes various programs stored in the secondary storage 1200 to execute various types of processing. One or more CPUs 1100 may be provided and may implement the processing in cooperation with each other.

The main memory 1300 includes, for example, a writable memory such as a cache memory or a random access memory (RAM) and is used as a work area in which an execution program of the CPU 1100 is read and processing data by the execution program is written.

The secondary storage 1200 is a non-transitory computer-readable storage medium. The secondary storage 1200 is, for example, a magnetic disk, a magneto-optical disk, a CD-ROM, a DVD-ROM, or a semiconductor memory. Examples of the secondary storage 1200 include a read only memory (ROM), a hard disk drive (HDD), a solid state drive (SSD), and a flash memory. The secondary storage 1200 stores, for example, an OS for controlling an entire information processing device such as Windows (registered trademark), iOS (registered trademark), or Android (registered trademark), a basic input/output system (BIOS), various device drivers for performing hardware operation of peripheral devices, various application software, various data, and files. The secondary storage 1200 stores programs for implementing various types of processing and various data necessary for implementing the various types of processing. A plurality of secondary storages 1200 may be provided, and the programs and data as described above may be divided and stored in each of the secondary storages 1200.

The operation mode switching assistance device 50 may include an input unit including a keyboard, a mouse, and the like and a display unit including a liquid crystal display device and the like for displaying data. A notification unit including the display unit, such as a lamp, a speaker outputting a sound, especially an alarm sound may be provided.

A series of processes for implementing various functions provided in the operation mode switching assistance device 50 is, for example, stored in the secondary storage 1200 (see FIG. 2) in the form of a program, and the CPU (processor) 1100 (see FIG. 2) reads the program into the main memory 1300 (see FIG. 2) and executes information processing and computation processing, thereby implementing the various functions. The program may be a program pre-installed in the secondary storage 1200, a program provided in a state of being stored in another non-transitory computer-readable storage medium, a program distributed through wired or wireless communication means, or the like. Examples of the non-transitory computer-readable storage medium include a magnetic disk, a magneto-optical disk, a CD-ROM, a DVD-ROM, and a semiconductor memory.

The operation mode switching assistance device 50 controls switching between operation modes of the fuel production system 1. The operation mode switching assistance device 50 acquires an electricity selling price of electricity generated by the biomass-fired power generation facility 10 and an SAF selling price (fuel selling price) of SAF (fuel) produced by the fuel production system 1 and controls switching between an electricity selling mode which is an operation mode of selling the electricity generated by the biomass-fired power generation facility 10 and an SAF production mode (fuel production mode) which is an operation mode of producing the SAF by the fuel production system 1 on the basis of a result of comparison between the electricity selling price and the SAF selling price.

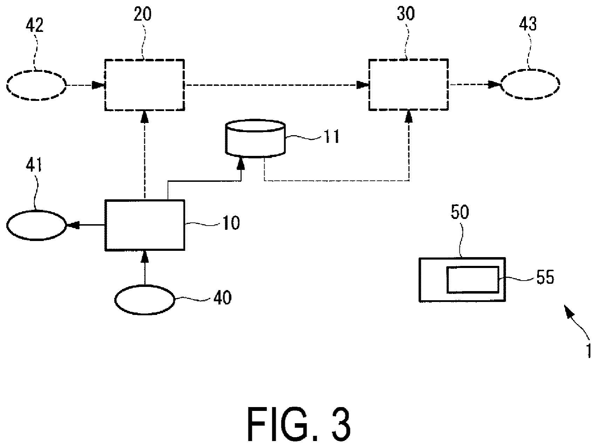

FIG. 3 is a diagram illustrating a fuel production system in an electricity selling mode in some embodiments of the present disclosure.

When the operation mode switching assistance device 50 sets the operation mode of the fuel production system 1 to the electricity selling mode, the fuel production system 1 is controlled as follows.

As indicated by a solid line in FIG. 3, the biomass 40 serving as fuel is fed into the biomass-fired power generation facility 10. The biomass-fired power generation facility 10 generates electricity by using the biomass 40, and all the generated electricity (excluding electricity consumed in the biomass-fired power generation facility 10) is sold as the electricity for selling 41. Carbon dioxide generated during electricity generation is stored in the CO2 tank 11.

When the operation mode is the electricity selling mode, the supply of electricity to the water electrolyzer 20 and the feeding of carbon dioxide to the FT synthesis device 30 from the biomass-fired power generation facility 10, which are indicated by broken lines in FIG. 3, are not performed. That is, SAF production using the electricity of the biomass-fired power generation facility 10 is not performed.

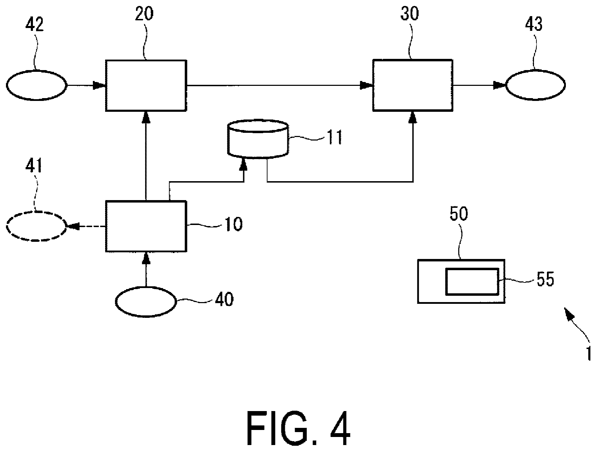

FIG. 4 is a diagram illustrating a fuel production system in an SAF production mode in some embodiments of the present disclosure.

When the operation mode switching assistance device 50 sets the operation mode of the fuel production system 1 to the SAF production mode, the fuel production system 1 is controlled as follows.

As indicated by a solid line in FIG. 4, the biomass 40 serving as fuel is fed into the biomass-fired power generation facility 10. The biomass-fired power generation facility 10 generates electricity by using the biomass 40, and all the generated electricity (excluding electricity consumed in the biomass-fired power generation facility 10) is supplied to the water electrolyzer 20. Carbon dioxide generated during electricity generation is fed to the FT synthesis device 30 via the CO2 tank 11.

The water electrolyzer 20 is supplied with electricity from the biomass-fired power generation facility 10 and performs water electrolysis to generate hydrogen (H2). When the electricity supplied from the biomass-fired power generation facility 10 is insufficient, or when the external electricity 42 is inexpensive, the water electrolyzer 20 is also supplied with electricity from the external electricity 42. The generated hydrogen is fed to the FT synthesis device 30.

The FT synthesis device 30 is fed with hydrogen from the water electrolyzer 20 and is fed with carbon dioxide from the biomass-fired power generation facility 10 or the CO2 tank 11. In the FT synthesis device 30, liquefied hydrocarbon (CnH2n+2) is synthesized, and SAF 43 serving as fuel is produced. The synthesized liquefied hydrocarbon is used as the SAF 43.

When the operation mode is the SAF production mode, electricity is not supplied from the biomass-fired power generation facility 10 to the outside as indicated by a broken line in FIG. 4. That is, the electricity of the biomass-fired power generation facility 10 is not sold.

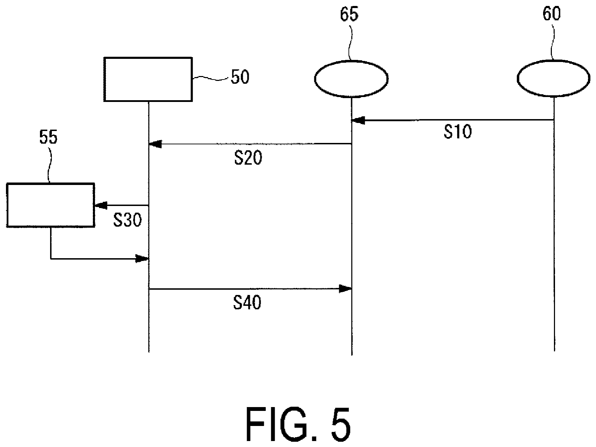

FIG. 5 is a diagram illustrating information flow in some embodiments of the present disclosure.

As illustrated in FIG. 5, the operation mode switching assistance device 50 acquires input information from an information collection device 60 and a user terminal 65.

The information collection device 60 collects and acquires market information related to the fuel production system 1. The market information is, for example, an electricity selling unit price, an electricity purchasing unit price, a biomass unit price, and an SAF unit price (fuel unit price), and is various types of information in a market related to the fuel production system 1. The market information collected by the information collection device 60 is received by the user terminal 65 (S10).

The user terminal 65 acquires business operator information related to the fuel production system 1. The business operator information includes a biomass feed amount that can be procured, an upper limit of an external electricity purchasing cost, a CO2 tank storage amount, and the like, and is various types of information related to a business operator who uses the fuel production system 1. The business operator information is input to the user terminal 65 by the business operator. The business operator information acquired by the user terminal 65 is added to the market information received by the user terminal 65 and transmitted to the operation mode switching assistance device 50 (S20).

The operation mode switching assistance device 50 acquires an electricity selling price of the electricity generated by the biomass-fired power generation facility 10 and an SAF selling price of the SAF produced by the fuel production system 1 based on the market information and the business operator information transmitted from the user terminal 65. The operation mode switching assistance device 50 compares the electricity selling price with the SAF selling price and controls switching between the electricity selling mode in which electricity is sold and the SAF production mode in which the SAF is produced so as to increase the profit of the business operator, that is, the profit of the fuel production system 1 on the basis of the comparison result.

The operation mode switching assistance device 50 may include the economic efficiency simulator 55. The economic efficiency simulator 55 performs an economic efficiency simulation based on the market information and the business operator information as input information and determines an electricity selling amount in the electricity selling mode and an SAF production amount in the SAF production mode (S30). The economic efficiency simulator 55 may perform an economic efficiency simulation, calculate a process value of the fuel production system 1 and output a cost estimation value of the fuel production system 1.

The operation mode switching assistance device 50 proposes either one of the operation modes of the electricity selling mode and the SAF production mode. When the economic efficiency simulator 55 is provided, the electricity selling amount in the electricity selling mode or the SAF production amount in the SAF production mode is proposed based on the result of the simulation (S40).

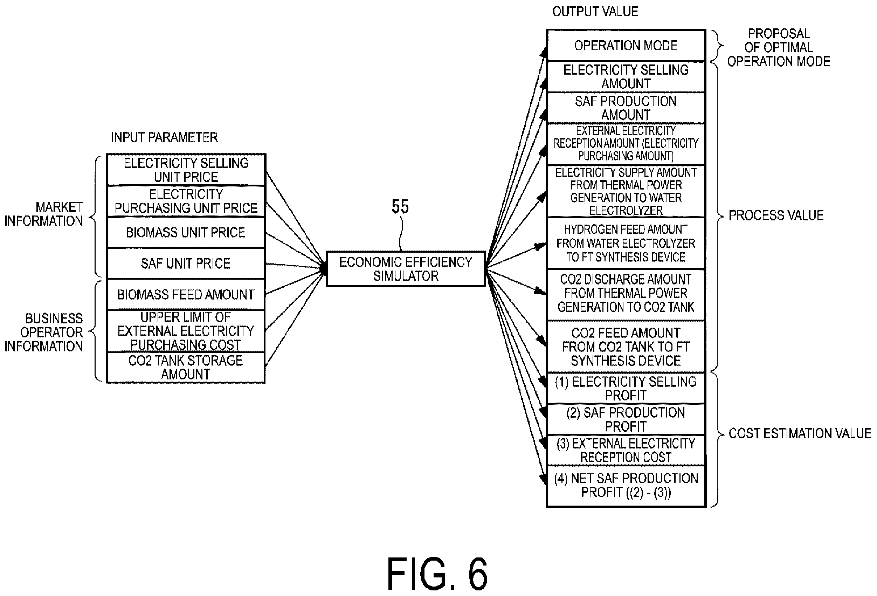

FIG. 6 is a diagram illustrating an economic efficiency simulator in some embodiments of the present disclosure.

As illustrated in FIG. 6, the economic efficiency simulator 55 receives an input parameter as input information and outputs an output value as output information.

The input parameter includes the market information and the business operator information. The market information includes an electricity selling unit price which is a unit price for selling electricity, an electricity purchasing unit price which is a unit price for purchasing electricity, a biomass unit price which is a procurement unit price of the biomass 40, and an SAF unit price which is a selling unit price of the SAF 43. The business operator information includes a biomass feed amount indicating an amount of the biomass 40 that can be procured by the business operator, an upper limit of an external electricity purchasing cost based on a procurement fund of the business operator, and a CO2 tank storage amount which is a volume of carbon dioxide stored in the CO2 tank 11.

The output value includes a proposal of an optimal operation mode (operation mode selection information), a process value of the fuel production system 1, and a cost estimation value. The proposal of an optimal operation mode includes the operation modes of the electricity selling mode and the SAF production mode. The process value of the fuel production system 1 includes an electricity selling amount by the fuel production system 1, an SAF production amount which is a production amount of the SAF by the fuel production system 1, an external electricity reception amount (electricity purchasing amount) which is an amount of electricity received (purchased) from the external electricity 42, an electricity supply amount from thermal power generation to water electrolyzer which is an amount of electricity supplied from the biomass-fired power generation facility 10 to the water electrolyzer 20, a hydrogen feed amount from water electrolyzer to FT synthesis device which is an amount of hydrogen fed from the water electrolyzer 20 to the FT synthesis device 30, a CO2 discharge amount from thermal power generation to CO2 tank which is an amount of carbon dioxide discharged from the biomass-fired power generation facility 10 to the CO2 tank 11, and a CO2 feed amount from CO2 tank to FT synthesis device which is an amount of carbon dioxide fed from the CO2 tank 11 to the FT synthesis device 30. The cost estimation value includes (1) electricity selling profit expected, (2) SAF production profit expected, (3) external electricity reception cost, and (4) net SAF production profit ((2) - (3)).

The economic efficiency simulator 55 receives each input parameter as the input information, performs computation, and outputs each output value as the output information.

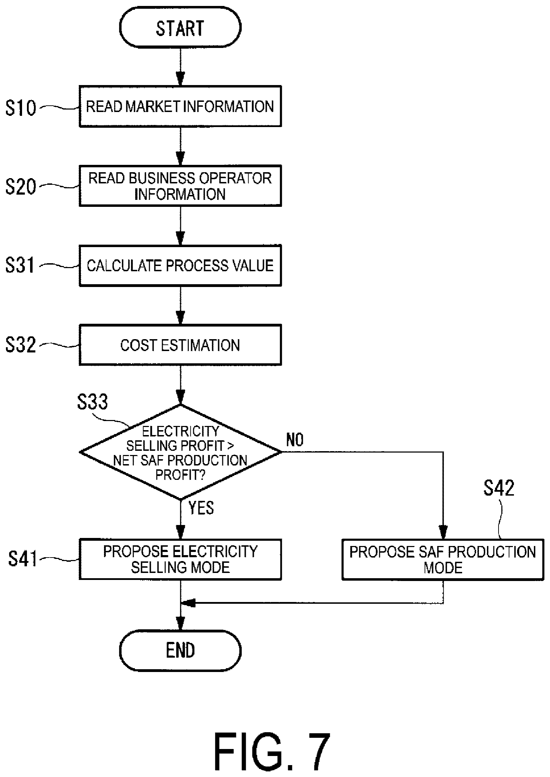

FIG. 7 is a diagram illustrating a control flow of an operation mode switching assistance device in some embodiments of the present disclosure.

Each step in the flowchart of FIG. 7 corresponds to each step in the information flow of FIG. 5. S30 in the information flow of FIG. 5 corresponds to S31 through S33 in the flowchart of FIG. 7. S40 in the information flow of FIG. 5 corresponds to S41 through S42 in the flowchart of FIG. 7.

In step S10, in the control by the operation mode switching assistance device 50, the information collection device 60 collects and acquires the market information (an electricity selling unit price, an electricity purchasing unit price, a biomass unit price, and an SAF unit price). The operation mode switching assistance device 50 reads the market information collected via the user terminal 65.

In step S20, in the control by the operation mode switching assistance device 50, the business operator information (a biomass feed amount, an upper limit of an external electricity purchasing cost, and a CO2 tank storage amount) is input to the user terminal 65. The operation mode switching assistance device 50 reads the business operator information input to the user terminal 65.

In step S31, the economic efficiency simulator 55 of the operation mode switching assistance device 50 calculates process values (an electricity selling amount, an SAF production amount, an external electricity reception amount (an electricity purchasing amount), an electricity supply amount from thermal power generation to water electrolyzer, a hydrogen feed amount from water electrolyzer to FT synthesis device, a CO2 discharge amount from thermal power generation to CO2 tank, and a CO2 feed amount from CO2 tank to FT synthesis device) by an economic efficiency simulation.

Subsequently, in step S32, the economic efficiency simulator 55 performs cost estimation ((1) electricity selling profit, (2) SAF production profit, (3) external electricity reception cost, and (4) net SAF production profit ((2) - (3))) by an economic efficiency simulation and calculates a cost estimation value.

In step S33, the operation mode switching assistance device 50 compares (1) electricity selling profit and (4) net SAF production profit, and when (1) electricity selling profit is higher than (4) net SAF production profit (YES in S33), the processing proceeds to step S41. On the other hand, when (1) electricity selling profit is equal to or lower than (4) net SAF production profit (NO in S33), the processing proceeds to step S42.

When (1) electricity selling profit is higher than (4) net SAF production profit, it can be said that an obtained profit becomes larger when electricity generated by the biomass-fired power generation facility 10 is sold. Therefore, the operation mode switching assistance device 50 proposes the electricity selling mode as the operation mode to the fuel production system 1 (S41). In this case, the operation mode switching assistance device 50 outputs a process value and a cost estimation value used in the electricity selling mode.

On the other hand, when (1) electricity selling profit is equal to or lower than (4) net SAF production profit, it can be said that an obtained profit becomes larger when the SAF is produced. In addition, since an electricity selling unit price is low, an electricity purchasing unit price is expected to be also low, and thus it can be considered that producing the SAF is profitable even when the external electricity 42 which is inexpensive is purchased. Therefore, the operation mode switching assistance device 50 proposes the SAF production mode as the operation mode to the fuel production system 1 (S42). In this case, the operation mode switching assistance device 50 outputs a process value and a cost estimation value used in the SAF production mode.

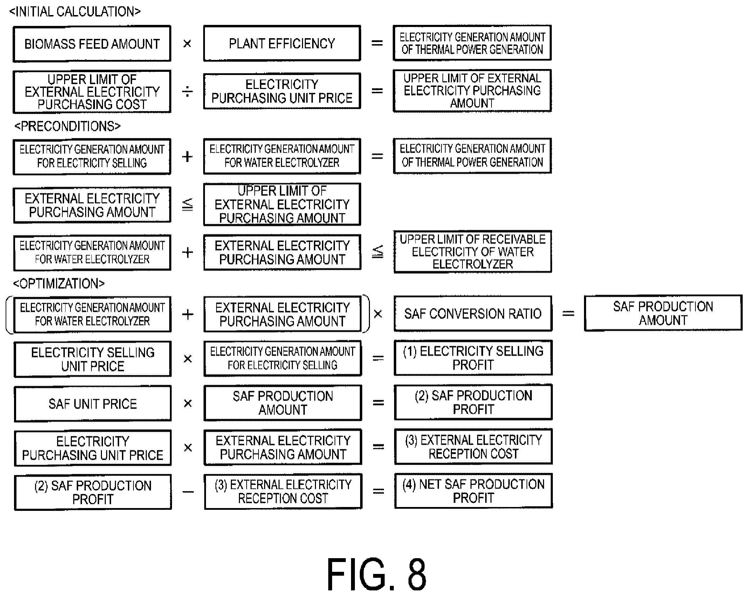

FIG. 8 is a diagram illustrating computation of an economic efficiency simulator in some embodiments of the present disclosure.

As illustrated in FIG. 8, the economic efficiency simulator 55 performs initial calculation, sets preconditions and performs optimization.

### Initial Calculation

The economic efficiency simulator 55 multiplies the biomass feed amount as an input parameter by a plant efficiency and sets the product as an electricity generation amount of thermal power generation (the biomass-fired power generation facility 10). The plant efficiency is an electricity generation efficiency of the biomass-fired power generation facility 10 and may be either a variable value that varies by using a parameter such as an outside temperature or a fixed value. The economic efficiency simulator 55 divides the upper limit of the external electricity purchasing cost as an input parameter by the electricity purchasing unit price as an input parameter and sets the quotient as an upper limit of an external electricity purchasing amount.

### Preconditions

As a precondition, the electricity generation amount of thermal power generation is the sum (total) of an electricity generation amount for electricity selling which is the amount of electricity sold by the biomass-fired power generation facility 10, and an electricity generation amount for a water electrolyzer which is the amount of electricity supplied from the biomass-fired power generation facility 10 to the water electrolyzer 20.

As a precondition, the external electricity purchasing amount purchased from the outside by the business operator is equal to or less than the upper limit of the external electricity purchasing amount.

As a precondition, the sum (total) of the electricity generation amount for a water electrolyzer and the external electricity purchasing amount is an upper limit value of electricity receivable by the water electrolyzer 20 and is equal to or less than a receivable electricity upper limit of the water electrolyzer which is a fixed value.

### Optimization

The economic efficiency simulator 55 performs optimization based on the initial calculation and the preconditions described above.

The economic efficiency simulator 55 multiplies the sum of the electricity generation amount for water electrolyzer and the external electricity purchasing amount by an SAF conversion ratio and sets the product as an SAF production amount. The SAF conversion ratio is a value indicating a ratio (conversion ratio) of the amount of SAF produced to electricity supplied to the water electrolyzer 20 in the fuel production system 1, and the SAF conversion ratio may be a fixed value.

The economic efficiency simulator 55 multiplies the electricity selling unit price as an input parameter by the electricity generation amount for electricity selling and sets the product as (1) electricity selling profit. (1) Electricity selling profit is a profit of electricity generated by the biomass-fired power generation facility 10 and sold.

The economic efficiency simulator 55 multiplies the SAF unit price as an input parameter by the SAF production amount and sets the product as (2) SAF production profit. (2) SAF production profit is a profit of SAF produced by the fuel production system 1.

The economic efficiency simulator 55 multiplies the electricity purchasing unit price by the external electricity purchasing amount and sets the product as (3) external electricity reception cost. (3) External electricity reception cost is a cost required for the electricity received (purchased) from the external electricity 42.

The economic efficiency simulator 55 subtracts (3) external electricity reception cost from (2) SAF production profit and sets the difference as (4) net SAF production profit. (4) Net SAF production profit is a net profit of SAF of the business operator obtained by subtracting the cost of the external electricity 42 required for producing the SAF from the profit of the produced SAF.

After performing the above calculation, the economic efficiency simulator 55 optimizes the electricity generation amount for water electrolyzer and the external electricity purchasing amount such that (4) net SAF production profit is maximized.

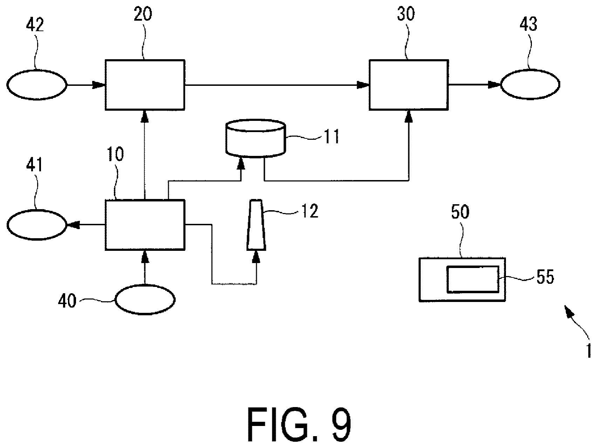

FIG. 9 is a diagram illustrating a fuel production system including a stack in some embodiments of the present disclosure.

As illustrated in FIG. 9, the fuel production system 1 includes a stack 12 that discharges carbon dioxide discharged from the biomass-fired power generation facility 10 to the atmosphere.

When the CO2 tank storage amount in the CO2 tank 11 that stores carbon dioxide discharged from the biomass-fired power generation facility 10 has reached an upper limit value, the carbon dioxide may be discharged from the stack 12 to the atmosphere in addition to being fed to the FT synthesis device 30. When the amount of carbon dioxide stored in the CO2 tank 11 reaches the upper limit, there is no place for the carbon dioxide fed from the biomass-fired power generation facility 10 to escape. However, by providing the stack 12, the amount of carbon dioxide fed to the CO2 tank 11 can be regulated and the operation of the biomass-fired power generation facility 10 can be continued.

When the amount of carbon dioxide stored in the CO2 tank 11 reaches the upper limit, the electricity generation in the biomass-fired power generation facility 10 may be stopped. Then, although the carbon dioxide stored in the CO2 tank 11 has no place to escape, generation of new carbon dioxide can be stopped and the safety of the CO2 tank 11 and the fuel production system 1 can be ensured by stopping the electricity generation in the biomass-fired power generation facility 10.

### Second Embodiment

In the above-described embodiment, the external electricity 42 is supplied to the water electrolyzer 20 from the outside, but in the present embodiment, the external electricity 42 is not purchased. Other points are similar to the above-described embodiment, and the same components are denoted by the same reference signs and the descriptions thereof are omitted.

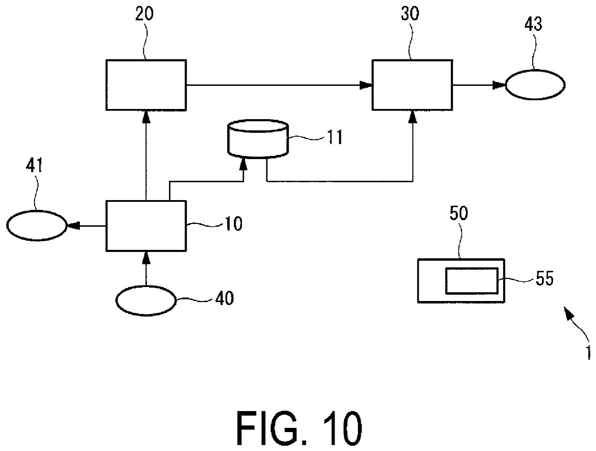

FIG. 10 is a diagram illustrating a fuel production system in some embodiments of the present disclosure.

As illustrated in FIG. 10, the water electrolyzer 20 is supplied with electricity only from the biomass-fired power generation facility 10.

The FT synthesis device 30 in the present embodiment includes a reverse shift reaction catalyst. In reverse shift reaction, carbon monoxide and water are produced from carbon dioxide and hydrogen.

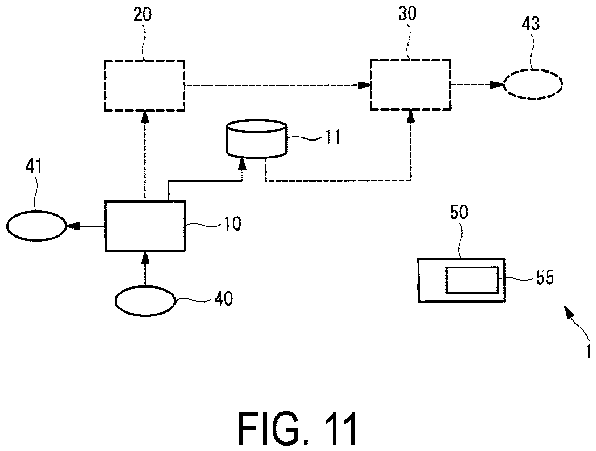

FIG. 11 is a diagram illustrating a fuel production system in an electricity selling mode in some embodiments of the present disclosure.

When the operation mode switching assistance device 50 sets the operation mode of the fuel production system 1 to the electricity selling mode, the fuel production system 1 is controlled as follows.

As indicated by a solid line in FIG. 11, the biomass 40 serving as fuel is fed into the biomass-fired power generation facility 10. The biomass-fired power generation facility 10 generates electricity by using the biomass 40, and all the generated electricity (excluding electricity consumed in the biomass-fired power generation facility 10) is sold as the electricity for selling 41. Carbon dioxide generated during electricity generation is stored in the CO2 tank 11.

When the operation mode is the electricity selling mode, the supply of electricity from the biomass-fired power generation facility 10 to the water electrolyzer 20 and the feeding of carbon dioxide from the CO2 tank 11 to the FT synthesis device 30, which are indicated by broken lines in FIG. 11, are not performed. That is, SAF production using the electricity of the biomass-fired power generation facility 10 is not performed.

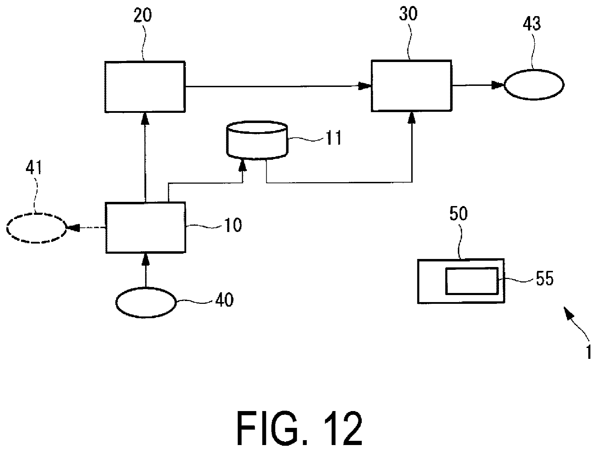

FIG. 12 is a diagram illustrating a fuel production system in an SAF production mode in some embodiments of the present disclosure.

When the operation mode switching assistance device 50 sets the operation mode of the fuel production system 1 to the SAF production mode, the fuel production system 1 is controlled as follows.

As indicated by a solid line in FIG. 12, the biomass 40 serving as fuel is fed into the biomass-fired power generation facility 10. The biomass-fired power generation facility 10 generates electricity by using the biomass 40, and all the generated electricity (excluding electricity consumed in the biomass-fired power generation facility 10) is supplied to the water electrolyzer 20. Carbon dioxide generated during electricity generation is fed to the FT synthesis device 30 via the CO2 tank 11.

The water electrolyzer 20 is supplied with electricity from the biomass-fired power generation facility 10 and performs water electrolysis to generate hydrogen (H2). The generated hydrogen is fed to the FT synthesis device 30.

The FT synthesis device 30 is fed with the hydrogen from the water electrolyzer 20 and is fed with the carbon dioxide from the biomass-fired power generation facility 10 or the CO2 tank 11, and liquefied hydrocarbon (CnH2n+2) is synthesized and the SAF 43 is produced. The synthesized liquefied hydrocarbon is used as the SAF 43.

When the operation mode is the SAF production mode, electricity is not supplied from the biomass-fired power generation facility 10 to the outside as indicated by a broken line in FIG. 12. That is, the electricity of the biomass-fired power generation facility 10 is not sold.

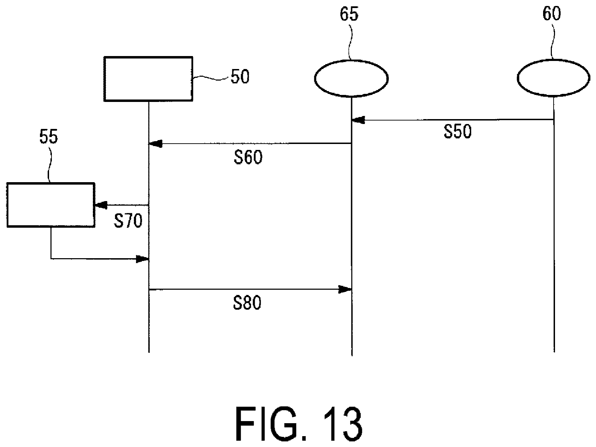

FIG. 13 is a diagram illustrating information flow in some embodiments of the present disclosure.

As illustrated in FIG. 13, the operation mode switching assistance device 50 acquires input information from the information collection device 60 and the user terminal 65.

The information collection device 60 collects and acquires market information related to the fuel production system 1. The market information is, for example, an electricity selling unit price, a biomass unit price, and an SAF unit price, and is various types of information in a market related to the fuel production system 1. The market information collected by the information collection device 60 is received by the user terminal 65 (S50).

The user terminal 65 acquires business operator information related to the fuel production system 1. The business operator information includes a biomass feed amount, a CO2 tank storage amount, and the like, and is various types of information related to a business operator who uses the fuel production system 1. The business operator information is input to the user terminal 65 by the business operator. The business operator information acquired by the user terminal 65 is added to the market information received by the user terminal 65 and transmitted to the operation mode switching assistance device 50 (S60).

The operation mode switching assistance device 50 acquires an electricity selling price of the electricity generated by the biomass-fired power generation facility 10 and an SAF selling price of the SAF produced by the fuel production system 1 based on the market information and the business operator information transmitted from the user terminal 65. The operation mode switching assistance device 50 compares the electricity selling price with the SAF selling price and controls switching between the electricity selling mode in which electricity is sold and the SAF production mode in which the SAF is produced so as to increase the profit of the business operator, that is, the profit of the fuel production system 1 on the basis of the comparison result.

The operation mode switching assistance device 50 may include the economic efficiency simulator 55. The economic efficiency simulator 55 performs an economic efficiency simulation based on the market information and the business operator information as input information and determines an electricity selling amount in the electricity selling mode and an SAF production amount in the SAF production mode (S70). The economic efficiency simulator 55 may perform an economic efficiency simulation, calculate a process value of the fuel production system 1 and output a cost estimation value of the fuel production system 1.

The operation mode switching assistance device 50 proposes either one of the operation modes of the electricity selling mode and the SAF production mode. When the economic efficiency simulator 55 is provided, the electricity selling amount in the electricity selling mode or the SAF production amount in the SAF production mode is proposed based on the result of the simulation (S80).

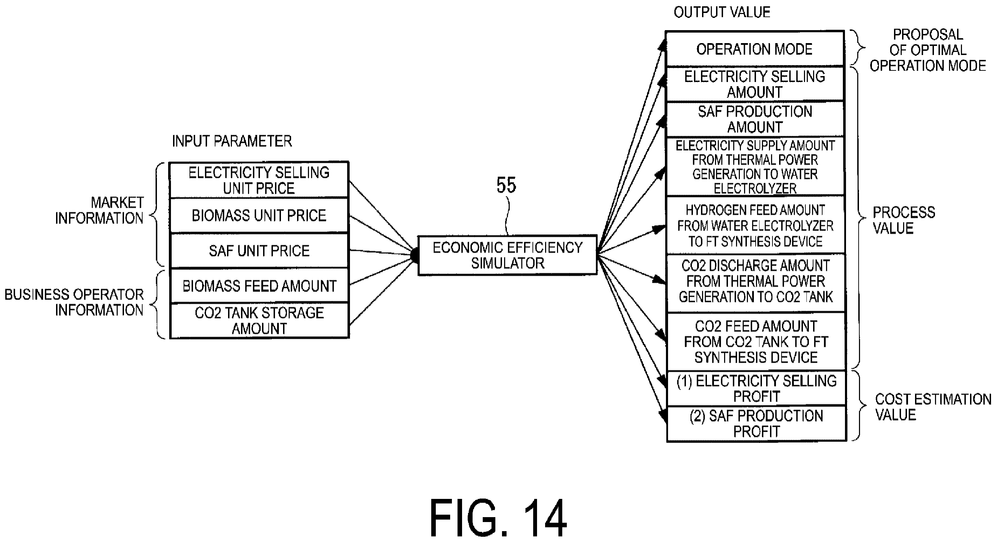

FIG. 14 is a diagram illustrating an economic efficiency simulator in some embodiments of the present disclosure.

As illustrated in FIG. 14, the economic efficiency simulator 55 receives an input parameter as input information and outputs an output value as output information.

The input parameter includes the market information and the business operator information. The market information includes an electricity selling unit price which is a unit price for selling electricity, a biomass unit price which is a unit price of the biomass 40, and an SAF unit price which is a unit price of the SAF 43. The business operator information includes a biomass feed amount indicating an amount of the biomass 40 used by the business operator and a CO2 tank storage amount which is a volume of carbon dioxide stored in the CO2 tank 11.

The output value includes a proposal of an optimal operation mode (operation mode selection information), a process value of the fuel production system 1, and a cost estimation value. The proposal of an optimal operation mode includes the operation modes of the electricity selling mode and the SAF production mode. The process value of the fuel production system 1 includes an electricity selling amount by the fuel production system 1, an SAF production amount which is a production amount of the SAF by the fuel production system 1, an electricity supply amount from thermal power generation to water electrolyzer which is an amount of electricity supplied from the biomass-fired power generation facility 10 to the water electrolyzer 20, a hydrogen feed amount from water electrolyzer to FT synthesis device which is an amount of hydrogen fed from the water electrolyzer 20 to the FT synthesis device 30, a CO2 discharge amount from thermal power generation to CO2 tank which is an amount of carbon dioxide discharged from the biomass-fired power generation facility 10 to the CO2 tank 11, and a CO2 feed amount from CO2 tank to FT synthesis device which is an amount of carbon dioxide fed from the CO2 tank 11 to the FT synthesis device 30. The cost estimation value includes (1) electricity selling profit expected and (2) SAF production profit expected.

The economic efficiency simulator 55 receives each input parameter as the input information, performs computation and outputs each output value as the output information.

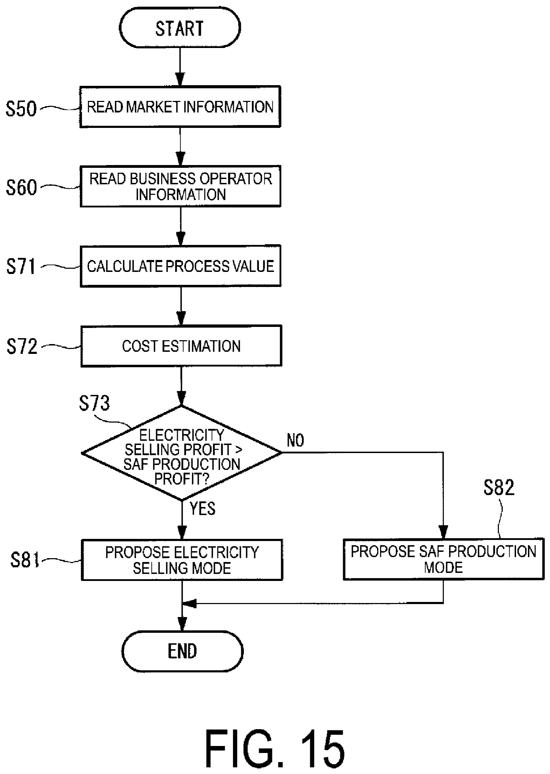

FIG. 15 is a diagram illustrating a control flow of an operation mode switching assistance device in some embodiments of the present disclosure.

Each step in the flowchart of FIG. 15 corresponds to each step in the information flow of FIG. 13. S70 in the information flow of FIG. 13 corresponds to S71 through S73 in the flowchart of FIG. 15. S80 in the information flow of FIG. 13 corresponds to S81 through S82 in the flowchart of FIG. 15.

In step S50, in the control by the operation mode switching assistance device 50, the information collection device 60 collects and acquires the market information (an electricity selling unit price, a biomass unit price, and an SAF unit price). The operation mode switching assistance device 50 reads the market information collected via the user terminal 65.

In step S60, in the control by the operation mode switching assistance device 50, the business operator information (a biomass feed amount and a CO2 tank storage amount) is input to the user terminal 65. The operation mode switching assistance device 50 reads the business operator information input to the user terminal 65.

In step S71, the economic efficiency simulator 55 of the operation mode switching assistance device 50 calculates process values (an electricity selling amount, an SAF production amount, an electricity supply amount from thermal power generation to water electrolyzer, a hydrogen feed amount from water electrolyzer to FT synthesis device, a CO2 discharge amount from thermal power generation to CO2 tank, and a CO2 feed amount from CO2 tank to FT synthesis device) by an economic efficiency simulation.

Subsequently, in step S72, the economic efficiency simulator 55 performs cost estimation ((1) electricity selling profit and (2) SAF production profit) by an economic efficiency simulation and calculates a cost estimation value.

In step S73, the operation mode switching assistance device 50 compares (1) electricity selling profit and (2) SAF production profit, and when (1) electricity selling profit is higher than (2) SAF production profit (YES in S73), the processing proceeds to step S81. On the other hand, when (1) electricity selling profit is equal to or lower than (2) SAF production profit (NO in S73), the processing proceeds to step S82.

When (1) electricity selling profit is higher than (2) SAF production profit, it can be said that an obtained profit becomes larger when electricity generated by the biomass-fired power generation facility 10 is sold. Therefore, the operation mode switching assistance device 50 proposes the electricity selling mode as the operation mode to the fuel production system 1 (S81). In this case, the operation mode switching assistance device 50 outputs a process value and a cost estimation value used in the electricity selling mode.

On the other hand, when (1) electricity selling profit is equal to or lower than (2) SAF production profit, it can be said that an obtained profit becomes larger when the SAF is produced. Therefore, the operation mode switching assistance device 50 proposes the SAF production mode as the operation mode to the fuel production system 1 (S82). In this case, the operation mode switching assistance device 50 outputs a process value and a cost estimation value used in the SAF production mode.

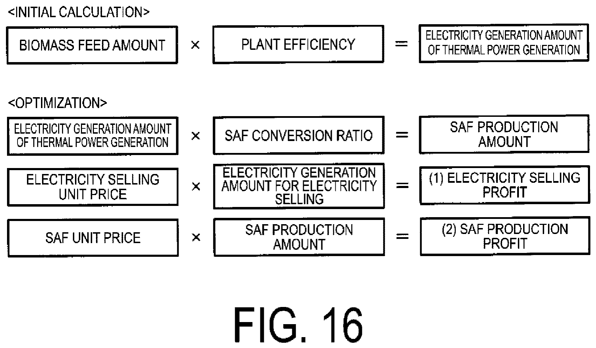

FIG. 16 is a diagram illustrating computation of an economic efficiency simulator in some embodiments of the present disclosure.

As illustrated in FIG. 16, the economic efficiency simulator 55 performs initial calculation and performs optimization.

### Initial Calculation

The economic efficiency simulator 55 multiplies the biomass feed amount as an input parameter by a plant efficiency and sets the product as an electricity generation amount of thermal power generation (the biomass-fired power generation facility 10). The plant efficiency is an efficiency of the entire plant of the fuel production system 1 and may be either a variable value that varies by using a parameter such as an outside temperature or a fixed value.

### Optimization

The economic efficiency simulator 55 multiplies the electricity generation amount of thermal power generation by an SAF conversion ratio and sets the product as an SAF production amount. The SAF conversion ratio is a value indicating a ratio (conversion ratio) of the amount of SAF produced to electricity supplied to the water electrolyzer 20 in the fuel production system 1, and the SAF conversion ratio may be a fixed value.

The economic efficiency simulator 55 performs optimization based on the initial calculation described above.

The economic efficiency simulator 55 multiplies the electricity selling unit price as an input parameter by the electricity generation amount for electricity selling and sets the product as (1) electricity selling profit. (1) Electricity selling profit is a profit of electricity generated by the biomass-fired power generation facility 10 and sold.

The economic efficiency simulator 55 multiplies the SAF unit price as an input parameter by the SAF production amount and sets the product as (2) SAF production profit. (2) SAF production profit is a profit of SAF produced by the fuel production system 1.

After performing the above calculation, the economic efficiency simulator 55 compares (1) electricity selling profit and (2) SAF production profit and performs optimization.

### Third Embodiment

In the above-described embodiment, the electricity used in the water electrolyzer 20 is the electricity of the biomass-fired power generation facility 10 and the external electricity 42 from the outside. However, in the present embodiment, in addition to a mode using the electricity of the biomass-fired power generation facility 10 and the external electricity 42, a mode using only the electricity of the biomass-fired power generation facility 10 and a mode using only the external electricity 42 are provided, and one of these modes is selected such that an obtained profit is maximized. Other points are similar to the above-described embodiment, and the same components are denoted by the same reference signs and the descriptions thereof are omitted.

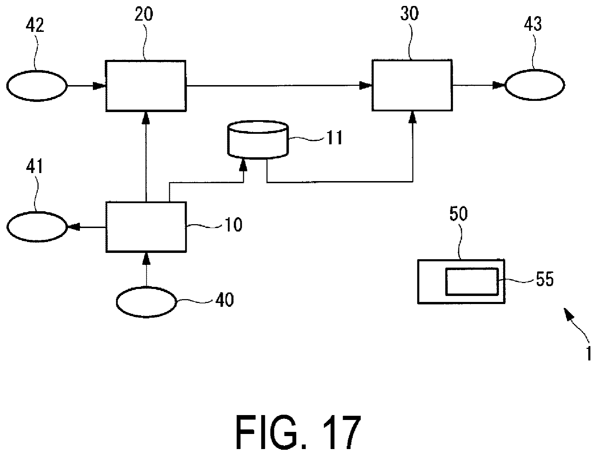

FIG. 17 is a diagram illustrating a fuel production system in some embodiments of the present disclosure.

As illustrated in FIG. 17, the water electrolyzer 20 is supplied with electricity from the biomass-fired power generation facility 10. The water electrolyzer 20 is supplied with electricity from the external electricity 42.

The FT synthesis device 30 in the present embodiment includes a reverse shift reaction catalyst. In reverse shift reaction, carbon monoxide and water are produced from carbon dioxide and hydrogen.

As an operation mode in the present embodiment, the operation mode switching assistance device 50 selects from three operation modes, that is, an operation mode A, an operation mode B, and an operation mode C. The operation mode A is a mode in which the water electrolyzer 20 uses only the electricity of the biomass-fired power generation facility 10, the operation mode B is a mode in which the water electrolyzer 20 uses only the external electricity 42, and the operation mode C is a mode in which the water electrolyzer 20 uses the electricity of the biomass-fired power generation facility 10 and the external electricity 42.

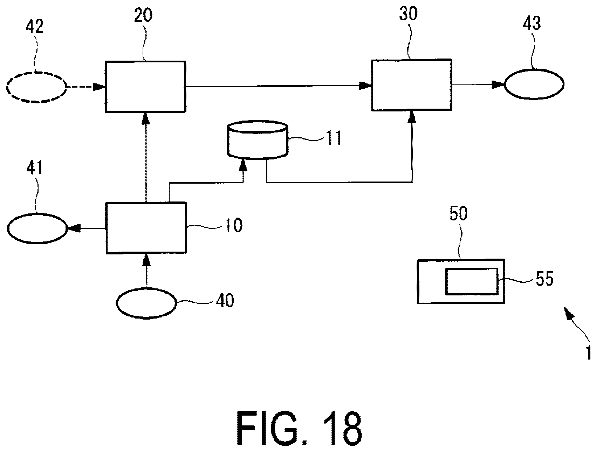

FIG. 18 is a diagram illustrating a fuel production system in an operation mode A in some embodiments of the present disclosure.

When the operation mode switching assistance device 50 sets the operation mode of the fuel production system 1 to the operation mode A, the fuel production system 1 is controlled as follows.

As indicated by a solid line in FIG. 18, the biomass 40 serving as fuel is fed into the biomass-fired power generation facility 10. The biomass-fired power generation facility 10 generates electricity by using the biomass 40, and the generated electricity is sold as the electricity for selling 41 and is supplied to the water electrolyzer 20. Carbon dioxide generated during electricity generation is fed to the FT synthesis device 30 via the CO2 tank 11.

The water electrolyzer 20 is supplied with electricity from the biomass-fired power generation facility 10 and performs water electrolysis to generate hydrogen (H2). The generated hydrogen is fed to the FT synthesis device 30.

The FT synthesis device 30 is fed with the hydrogen from the water electrolyzer 20 and is fed with the carbon dioxide from the biomass-fired power generation facility 10 via the CO2 tank 11, and liquefied hydrocarbon (CnH2n+2) is synthesized and the SAF 43 is produced. The synthesized liquefied hydrocarbon is used as the SAF 43.

When the operation mode is the operation mode A, the broken line portion in FIG. 18 is not performed, that is, the external electricity 42 is not purchased from the outside, and the external electricity 42 is not supplied to the water electrolyzer 20.

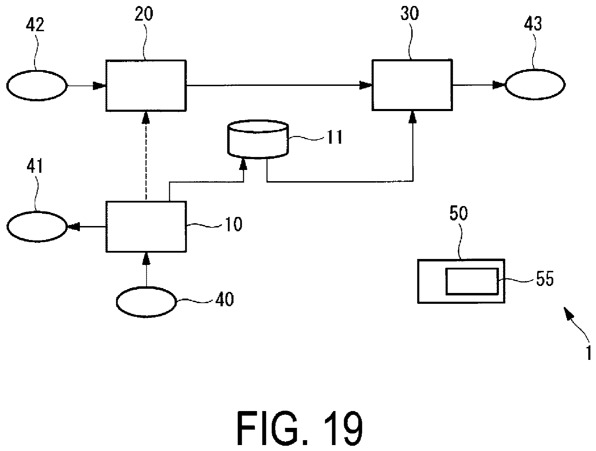

FIG. 19 is a diagram illustrating a fuel production system in an operation mode B in some embodiments of the present disclosure.

When the operation mode switching assistance device 50 sets the operation mode of the fuel production system 1 to the operation mode B, the fuel production system 1 is controlled as follows.

As indicated by a solid line in FIG. 19, the biomass 40 serving as fuel is fed into the biomass-fired power generation facility 10. The biomass-fired power generation facility 10 generates electricity by using the biomass 40, and all the generated electricity is sold as the electricity for selling 41. Carbon dioxide generated during electricity generation is fed to the FT synthesis device 30 via the CO2 tank 11.

The water electrolyzer 20 is supplied with electricity by purchasing the external electricity 42 from the outside and performs water electrolysis to generate hydrogen (H2). The generated hydrogen is fed to the FT synthesis device 30.

The FT synthesis device 30 is fed with the hydrogen from the water electrolyzer 20 and is fed with the carbon dioxide from the biomass-fired power generation facility 10 via the CO2 tank 11, and liquefied hydrocarbon (CnH2n+2) is synthesized and the SAF 43 is produced. The synthesized liquefied hydrocarbon is used as the SAF 43.

When the operation mode is the operation mode B, the broken line portion in FIG. 19, that is, supply of electricity from the biomass-fired power generation facility 10 to the water electrolyzer 20 is not performed.

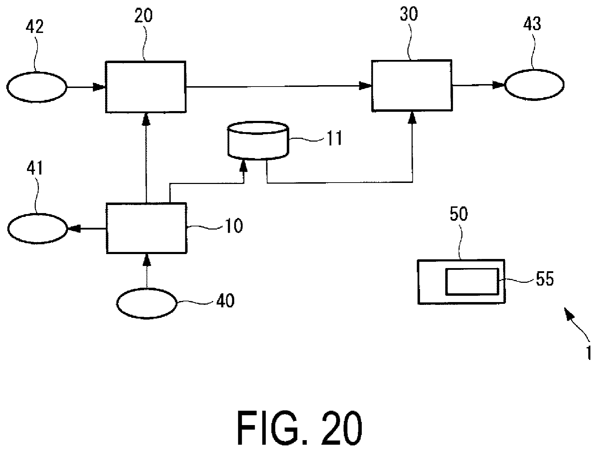

FIG. 20 is a diagram illustrating a fuel production system in an operation mode C in some embodiments of the present disclosure.

When the operation mode switching assistance device 50 sets the operation mode of the fuel production system 1 to the operation mode C, the fuel production system 1 is controlled as follows.

As indicated by a solid line in FIG. 20, the biomass 40 serving as fuel is fed into the biomass-fired power generation facility 10. The biomass-fired power generation facility 10 generates electricity by using the biomass 40, and the generated electricity is sold as the electricity for selling 41 and is supplied to the water electrolyzer 20. Carbon dioxide generated during electricity generation is fed to the FT synthesis device 30 via the CO2 tank 11.

The water electrolyzer 20 purchases the external electricity 42 from the outside and is supplied with electricity from the biomass-fired power generation facility 10 and performs water electrolysis to generate hydrogen (H2). The generated hydrogen is fed to the FT synthesis device 30.

The FT synthesis device 30 is fed with the hydrogen from the water electrolyzer 20 and is fed with the carbon dioxide from the biomass-fired power generation facility 10 via the CO2 tank 11, and liquefied hydrocarbon

(CnH2n+2) is synthesized and the SAF 43 is produced. The synthesized liquefied hydrocarbon is used as the SAF 43.

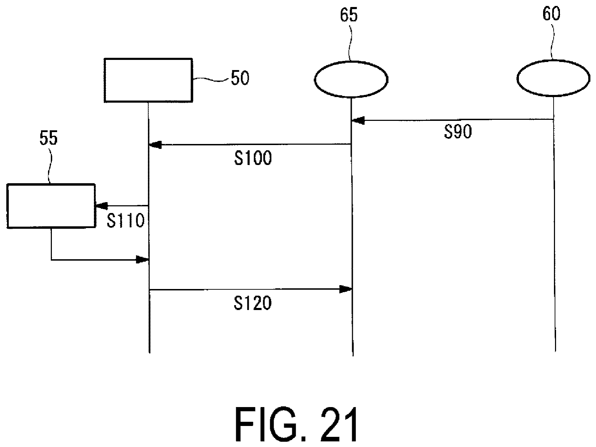

FIG. 21 is a diagram illustrating information flow in some embodiments of the present disclosure.

As illustrated in FIG. 21, the operation mode switching assistance device 50 acquires input information from the information collection device 60 and the user terminal 65.

The information collection device 60 collects and acquires market information related to the fuel production system 1. The market information is, for example, an electricity selling unit price, an electricity purchasing unit price, a biomass unit price, and an SAF unit price, and is various types of information in a market related to the fuel production system 1. The market information collected by the information collection device 60 is received by the user terminal 65 (S90).

The user terminal 65 acquires business operator information related to the fuel production system 1. The business operator information includes a biomass feed amount, an upper limit of an external electricity purchasing cost, a CO2 tank storage amount, and the like, and is various types of information related to a business operator who uses the fuel production system 1. The business operator information is input to the user terminal 65 by the business operator. The business operator information acquired by the user terminal 65 is added to the market information received by the user terminal 65 and transmitted to the operation mode switching assistance device 50 (S100).

The operation mode switching assistance device 50 acquires an electricity selling price of the electricity generated by the biomass-fired power generation facility 10, an SAF selling price of the SAF produced by the fuel production system 1, and an external electricity reception cost based on the market information and the business operator information transmitted from the user terminal 65. The operation mode switching assistance device 50 compares the electricity selling price, the SAF selling price, and the external electricity reception cost with each other and controls switching the operation mode to any one of the operation mode A, the operation mode B, and the operation mode C so as to increase the profit of the business operator, that is, the profit of the fuel production system 1 on the basis of the comparison result.

The operation mode switching assistance device 50 may include the economic efficiency simulator 55. The economic efficiency simulator 55 performs an economic efficiency simulation based on the market information and the business operator information as input information and extracts a process value in an optimal solution (S110). The economic efficiency simulator 55 may perform an economic efficiency simulation and determine an electricity selling amount and/or an SAF production amount in any one of the operation mode A, the operation mode B, and the operation mode C. The economic efficiency simulator 55 may perform an economic efficiency simulation, calculate a process value of the fuel production system 1 and output a cost estimation value of the fuel production system 1.

The operation mode switching assistance device 50 proposes any one of the operation modes of the operation mode A, the operation mode B, and the operation mode C. When the economic efficiency simulator 55 is provided, an electricity selling amount and/or an SAF production amount in any one of the operation mode A, the operation mode B, and the operation mode C are/is proposed based on the simulation result (S120).

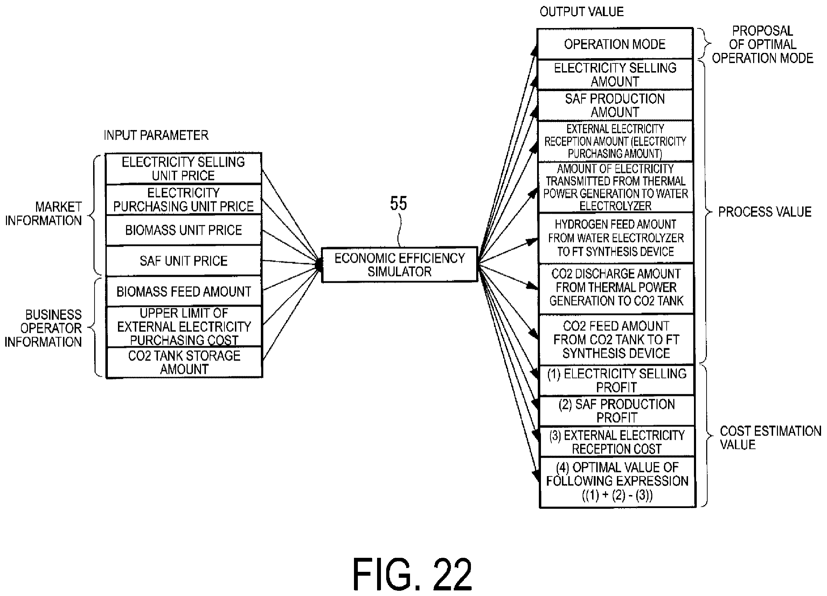

FIG. 22 is a diagram illustrating an economic efficiency simulator in some embodiments of the present disclosure.

As illustrated in FIG. 22, the economic efficiency simulator 55 receives an input parameter as input information and outputs an output value as output information.

The input parameter includes the market information and the business operator information. The market information includes an electricity selling unit price which is a unit price for selling electricity, an electricity purchasing unit price which is a unit price for purchasing electricity, a biomass unit price which is a unit price of the biomass 40, and an SAF unit price which is a unit price of the SAF 43. The business operator information includes a biomass feed amount indicating an amount of the biomass 40 used by a business operator, an upper limit of an external electricity purchasing cost based on a budget of the business operator, and a CO2 tank storage amount which is a volume of carbon dioxide stored in the CO2 tank 11.

The output value includes a proposal of an optimal operation mode (operation mode selection information), a process value of the fuel production system 1, and a cost estimation value. The proposal of an optimal operation mode includes the operation modes of the operation mode A, the operation mode B, and the operation mode C. The process value of the fuel production system 1 includes an electricity selling amount by the fuel production system 1, an SAF production amount which is a production amount of the SAF by the fuel production system 1, an external electricity reception amount (electricity purchasing amount) which is an amount of electricity received (purchased) from the external electricity 42, an electricity supply amount from thermal power generation to water electrolyzer which is an amount of electricity supplied from the biomass-fired power generation facility 10 to the water electrolyzer 20, a hydrogen feed amount from water electrolyzer to FT synthesis device which is an amount of hydrogen fed from the water electrolyzer 20 to the FT synthesis device 30, a CO2 discharge amount from thermal power generation to CO2 tank which is an amount of carbon dioxide discharged from the biomass-fired power generation facility 10 to the CO2 tank 11, and a CO2 feed amount from CO2 tank to FT synthesis device which is an amount of carbon dioxide fed from the CO2 tank 11 to the FT synthesis device 30. The cost estimation value includes (1) electricity selling profit expected, (2) SAF production profit expected, (3) external electricity reception cost, and (4) optimal value of ((1) + (2) - (3)).

The economic efficiency simulator 55 receives each input parameter as the input information, performs computation and outputs each output value as the output information.

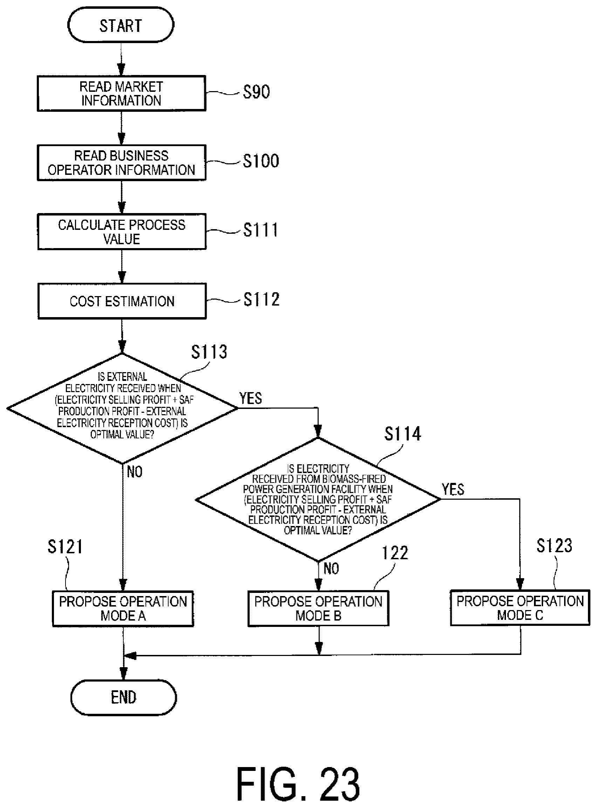

FIG. 23 is a diagram illustrating a control flow of an operation mode switching assistance device in some embodiments of the present disclosure.

Each step in the flowchart of FIG. 23 corresponds to each step in the information flow of FIG. 21. S110 in the information flow of FIG. 21 corresponds to S111 through S114 in the flowchart of FIG. 23. S 120 in the information flow of FIG. 21 corresponds to S121 through S123 in the flowchart of FIG. 23.

In step S90, in the control by the operation mode switching assistance device 50, the information collection device 60 collects and acquires the market information (an electricity selling unit price, an electricity purchasing unit price, a biomass unit price, and an SAF unit price). The operation mode switching assistance device 50 reads the market information collected via the user terminal 65.

In step S100, in the control by the operation mode switching assistance device 50, the business operator information (a biomass feed amount, an upper limit of an external electricity purchasing cost, and a CO2 tank storage amount) is input to the user terminal 65. The operation mode switching assistance device 50 reads the business operator information input to the user terminal 65.

In step S111, the economic efficiency simulator 55 of the operation mode switching assistance device 50 calculates process values (an electricity selling amount, an SAF production amount, an external electricity reception amount (an electricity purchasing amount), an electricity supply amount from thermal power generation to water electrolyzer, a hydrogen feed amount from water electrolyzer to FT synthesis device, a CO2 discharge amount from thermal power generation to CO2 tank, and a CO2 feed amount from CO2 tank to FT synthesis device) by an economic efficiency simulation.

Subsequently, in step S112, the economic efficiency simulator 55 performs cost estimation ((1) electricity selling profit, (2) SAF production profit, (3) external electricity reception cost, and (4) optimal solution of ((1) + (2) - (3))) by an economic efficiency simulation and calculates a cost estimation value.

In step S113, the operation mode switching assistance device 50 determines whether the water electrolyzer 20 receives (purchases) electricity from the external electricity 42 in the case of (4) optimal solution of ((1) + (2) - (3)). When the water electrolyzer 20 receives electricity from the external electricity 42 (YES in S113), the processing proceeds to step S114. On the other hand, when the water electrolyzer 20 does not receive electricity from the external electricity 42 (NO in S113), the processing proceeds to step S121.

When the water electrolyzer 20 does not receive electricity from the external electricity 42, it can be said that the water electrolyzer 20 is supplied with electricity only from the biomass-fired power generation facility 10. Therefore, the operation mode switching assistance device 50 proposes the operation mode A as the operation mode to the fuel production system 1

(S121). In this case, the operation mode switching assistance device 50 outputs a process value and a cost estimation value used in the operation mode A.

On the other hand, when the water electrolyzer 20 receives electricity from the external electricity 42, the operation mode switching assistance device 50 determines whether the water electrolyzer 20 is supplied with electricity from the biomass-fired power generation facility 10 in the case of (4) optimal solution of ((1) + (2) - (3)) (S114). When the water electrolyzer 20 receives electricity from the biomass-fired power generation facility 10 (YES in S114), the processing proceeds to step S123. On the other hand, when the water electrolyzer 20 does not receive electricity from the biomass-fired power generation facility 10 (NO in S114), the processing proceeds to step S122.

When the water electrolyzer 20 does not receive electricity from the biomass-fired power generation facility 10, it can be said that the water electrolyzer 20 is supplied with electricity only from the external electricity 42. Therefore, the operation mode switching assistance device 50 proposes the operation mode B as the operation mode to the fuel production system 1 (S122). In this case, the operation mode switching assistance device 50 outputs a process value and a cost estimation value used in the operation mode B.

When the water electrolyzer 20 receives electricity from the biomass-fired power generation facility 10, it can be said that the water electrolyzer 20 is supplied with electricity from both the biomass-fired power generation facility 10 and the external electricity 42. Therefore, the operation mode switching assistance device 50 proposes the operation mode C as the operation mode to the fuel production system 1 (S 123). In this case, the operation mode switching assistance device 50 outputs a process value and a cost estimation value used in the operation mode C.

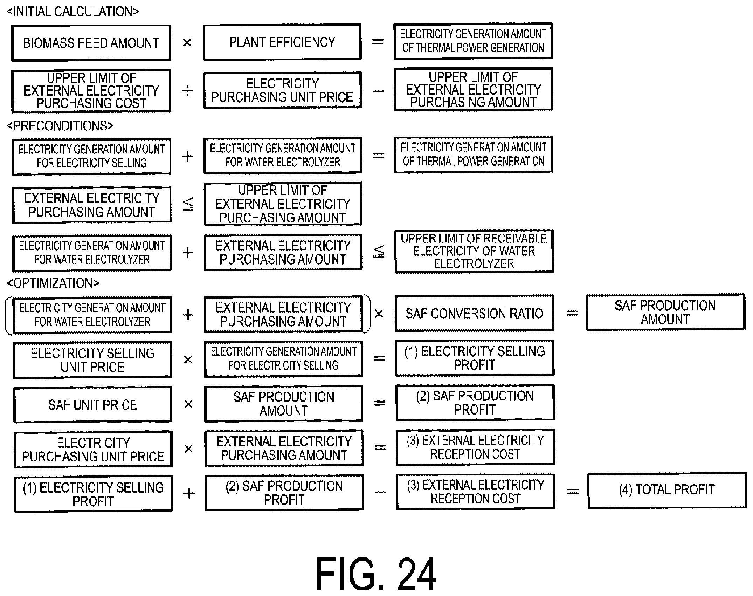

FIG. 24 is a diagram illustrating computation of an economic efficiency simulator in some embodiments of the present disclosure.

As illustrated in FIG. 24, the economic efficiency simulator 55 performs initial calculation, sets preconditions and performs optimization.

### Initial Calculation

The economic efficiency simulator 55 multiplies the biomass feed amount as an input parameter by a plant efficiency and sets the product as an electricity generation amount of thermal power generation (the biomass-fired power generation facility 10). The plant efficiency is an efficiency of the entire plant of the fuel production system 1 and may be either a variable value that varies by using a parameter such as an outside temperature or a fixed value. The economic efficiency simulator 55 divides the upper limit of the external electricity purchasing cost as an input parameter by the electricity purchasing unit price as an input parameter and sets the quotient as an upper limit of an external electricity purchasing amount.

### Preconditions

As a precondition, the electricity generation amount of thermal power generation is the sum (total) of an electricity generation amount for electricity selling which is the amount of electricity sold by the biomass-fired power generation facility 10, and an electricity generation amount for a water electrolyzer which is the amount of electricity supplied from the biomass-fired power generation facility 10 to the water electrolyzer 20.

As a precondition, the external electricity purchasing amount purchased from the outside by the business operator is equal to or less than the upper limit of the external electricity purchasing amount.

As a precondition, the sum (total) of the electricity generation amount for water electrolyzer and the external electricity purchasing amount is an upper limit value of electricity that can be received by the water electrolyzer 20 and is equal to or less than a receivable electricity upper limit of the water electrolyzer which is a fixed value.

### Optimization

The economic efficiency simulator 55 performs optimization based on the initial calculation and the preconditions described above.

The economic efficiency simulator 55 multiplies the sum of the electricity generation amount for water electrolyzer and the external electricity purchasing amount by an SAF conversion ratio and sets the product as an SAF production amount. The SAF conversion ratio is a value indicating a ratio (conversion ratio) of the amount of SAF produced to electricity supplied to the water electrolyzer 20 in the fuel production system 1, and the SAF conversion ratio may be a fixed value.

The economic efficiency simulator 55 multiplies the electricity selling unit price as an input parameter by the electricity generation amount for electricity selling and sets the product as (1) electricity selling profit. (1) Electricity selling profit is a profit of electricity generated by the biomass-fired power generation facility 10 and sold.

The economic efficiency simulator 55 multiplies the SAF unit price as an input parameter by the SAF production amount and sets the product as (2) SAF production profit. (2) SAF production profit is a profit of SAF produced by the fuel production system 1.

The economic efficiency simulator 55 multiplies the electricity purchasing unit price by the external electricity purchasing amount and sets the product as (3) external electricity reception cost. (3) External electricity reception cost is a cost required for the electricity received (purchased) from the external electricity 42.

The economic efficiency simulator 55 subtracts (3) external electricity reception cost from the sum of (1) electricity selling profit and (2) SAF production profit and sets the difference as (4) total profit. (4) Total profit is a total profit of the business operator obtained by subtracting the cost of the external electricity 42 required for producing the SAF from the profit of the electricity generated by the biomass-fired power generation facility 10 and the profit of the produced SAF.

After performing the above calculation, the economic efficiency simulator 55 performs optimization such that (4) total profit is maximized.

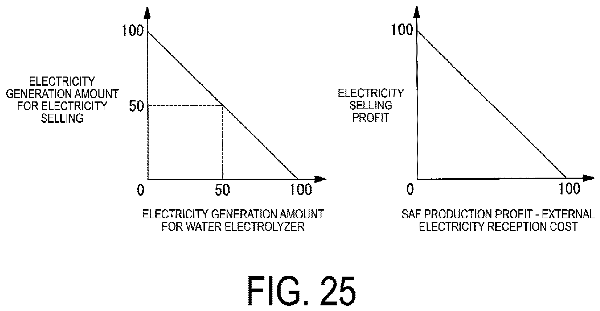

FIG. 25 is a diagram illustrating correlation between an electricity generation amount and a profit of a fuel production system in some embodiments of the present disclosure.

In the left diagram of FIG. 25, the vertical axis represents an electricity generation amount for electricity selling by the biomass-fired power generation facility 10, and the horizontal axis represents an electricity generation amount for water electrolyzer by the biomass-fired power generation facility 10. In the right diagram of FIG. 25, the vertical axis represents an electricity selling profit of the fuel production system 1, and the horizontal axis represents a value (difference) obtained by subtracting an external electricity reception cost from an SAF production profit. As illustrated in the left diagram of FIG. 25, the relationship between the electricity generation amount for electricity selling and the electricity generation amount for water electrolyzer shows a graph falling to the right in which the electricity generation amount for water electrolyzer decreases as the electricity generation amount for electricity selling increases. As illustrated in the right diagram of FIG. 25, the relationship between the electricity selling profit and the difference between the SAF production profit and the external electricity reception cost shows a graph falling to the right in which the difference between the SAF production profit and the external electricity reception cost decreases as the electricity selling profit increases.

As illustrated in the left diagram of FIG. 25, the electricity generation amount for electricity selling and the electricity generation amount for water electrolyzer out of the electricity generated by the biomass-fired power generation facility 10 take any values on the solid line where the total is 100. For example, when the electricity generation amount for electricity selling is 100, the electricity generation amount for water electrolyzer is 0, and when the electricity generation amount for electricity selling is 50, the electricity generation amount for water electrolyzer is 50.

As illustrated in the right diagram of FIG. 25, the electricity selling profit of the fuel production system 1 and the difference between the SAF production profit and the external electricity reception cost take any values on the solid line where the total is 100. Further, for example, when the electricity generation amount for water electrolyzer increases, the production amount of hydrogen by the water electrolyzer 20 increases, and thus the production amount of SAF increases, and as a result, the SAF production profit increases. However, when the SAF production profit increases, the electricity selling profit decreases as illustrated in the right diagram of FIG. 25. When the electricity generation amount for water electrolyzer increases, the electricity generation amount for electricity selling decreases as illustrated in the left diagram of FIG. 25, and as a result, the electricity selling profit decreases.

### Supplementary Notes

The operation mode switching assistance device, the economic efficiency simulator, the fuel production system, the operation mode switching assistance method, and the operation mode switching assistance program described in the above-described embodiments are understood as follows, for example.

An operation mode switching assistance device (50) according to a first aspect of the present disclosure is an operation mode switching assistance device for a fuel production system (1) for producing fuel by combining a biomass-fired power generation facility (10), a water electrolyzer (20), and a fuel production reaction device (30). The operation mode switching assistance device acquires an electricity selling price of electricity generated by the biomass-fired power generation facility and a fuel selling price of the fuel produced by the fuel production system and controls switching between an electricity selling mode in which the electricity is sold and a fuel production mode in which the fuel is produced on the basis of a result of comparison between the electricity selling price and the fuel selling price.

For the fuel production system for producing the fuel by combining the biomass-fired power generation facility, the water electrolyzer, and the fuel production reaction device, it is possible to switch between the electricity selling mode and the fuel production mode so as to execute the more profitable one, by comparing a case in which the electricity generated by the biomass-fired power generation facility is sold with a case in which fuel is produced by the fuel production system. It is possible to determine which to prioritize either electricity generation or fuel production in accordance with fluctuations in the electricity selling price and the fuel selling price.

An operation mode switching assistance device according to a second aspect of the present disclosure is the operation mode switching assistance device of the first aspect, wherein the operation mode switching assistance device may compare the electricity selling price with the fuel selling price and perform switching to the electricity selling mode when the electricity selling price is higher.

When the electricity selling price is higher than the fuel selling price, switching to the electricity selling mode is performed because it is more profitable to sell electricity, and the profit can thus be further increased in consideration of fluctuations in prices.

An operation mode switching assistance device according to a third aspect of the present disclosure is the operation mode switching assistance device of the first aspect or the second aspect, wherein the operation mode switching assistance device may compare the electricity selling price with the fuel selling price and perform switching to the fuel production mode when the fuel selling price is higher.

When the fuel selling price is higher than the electricity selling price, switching to the fuel production mode is performed because it is more profitable to produce fuel, and the profit can thus be further increased in consideration of fluctuations in prices.

An operation mode switching assistance device according to a fourth aspect of the present disclosure is the operation mode switching assistance device of the third aspect, wherein when electricity generated by the biomass-fired power generation facility to be used by the water electrolyzer is insufficient in the fuel production mode, the operation mode switching assistance device may supply electricity from an external electricity (42) to the water electrolyzer.

When the fuel selling price is higher than the electricity selling price, it can be said that an electricity purchasing price is also inexpensive. Since it is more profitable to produce fuel even when purchasing electricity, the profit can be increased by purchasing the external electricity and producing the fuel when the electricity used by the water electrolyzer is insufficient.

An economic efficiency simulator (55) according to a fifth aspect of the present disclosure is an economic efficiency simulator for a fuel production system for producing fuel by combining a biomass-fired power generation facility, a water electrolyzer, and a fuel production reaction device. The economic efficiency simulator determines, based on input information including an electricity selling price of electricity generated by the biomass-fired power generation facility and a fuel selling price of the fuel produced by the fuel production system, an electricity selling amount in an electricity selling mode in which the electricity is sold and a fuel production amount in a fuel production mode in which the fuel is produced.

Since the electricity selling amount and the fuel production amount can be determined by performing simulation based on the input information, the profit by electricity selling and the profit by fuel production can be optimized and maximized.

An economic efficiency simulator according to a sixth aspect of the present disclosure is the economic efficiency simulator of the fifth aspect, wherein the input information may include market information including an electricity selling unit price for calculating the electricity selling price and a fuel unit price for calculating the fuel selling price and business operator information.

An economic efficiency simulator according to a seventh aspect of the present disclosure is the economic efficiency simulator of the fifth aspect or the sixth aspect, wherein the economic efficiency simulator may output operation mode selection information of the electricity selling mode or the fuel production mode, a process value of the fuel production system including the electricity selling amount and the fuel production amount, and a cost estimation value of the fuel production system.

A fuel production system according to an eighth aspect of the present disclosure includes a biomass-fired power generation facility, a water electrolyzer, a fuel production reaction device, and the operation mode switching assistance device according to any one of the first to fourth aspects and produces fuel.

A fuel production system according to a ninth aspect is the fuel production system of the eighth aspect and may include a CO2 tank (11) configured to store carbon dioxide generated through electricity generation in the biomass-fired power generation facility.

Even when the amount of carbon dioxide discharged from the biomass-fired power generation facility is large and exceeds the throughput of the fuel production reaction device, the carbon dioxide can be stored in the tank and reused.

A fuel production system according to a tenth aspect of the present disclosure is the fuel production system of the ninth aspect, wherein the fuel production reaction device may be fed with carbon dioxide from the CO2 tank.

Since the carbon dioxide stored in the tank is fed to the fuel production reaction device, the fuel production reaction device can use the carbon dioxide when needed. Since the carbon dioxide is not directly fed from the biomass-fired power generation facility, the supply amount can be easily regulated.

A fuel production system according to an eleventh aspect is the fuel production system of the ninth aspect or the tenth aspect and may include a stack (12) configured to discharge a surplus of the carbon dioxide in the CO2 tank to atmosphere when an amount of the carbon dioxide stored in the CO2 tank reaches an upper limit.

When the amount of the carbon dioxide stored in the tank reaches the upper limit, there is no place for the carbon dioxide fed from the biomass-fired power generation facility to escape. However, by providing the stack, the volume of the carbon dioxide can be regulated, and the safety of the tank and the fuel production system can be ensured.

A fuel production system according to a twelfth aspect is the fuel production system of any one of the ninth to eleventh aspects, wherein when an amount of the carbon dioxide stored in the CO2 tank reaches an upper limit, the fuel production system may stop electricity generation in the biomass-fired power generation facility.

When the amount of the carbon dioxide stored in the tank reaches the upper limit, there is no place for the carbon dioxide fed from the biomass-fired power generation facility to escape. However, by stopping the electricity generation in the biomass-fired power generation facility, generation of new carbon dioxide can be suppressed, and the safety of the tank and the fuel production system can be ensured.

A fuel production system according to a thirteenth aspect of the present disclosure is the fuel production system of any one of the eighth to twelfth aspects and may include a power storage device configured to store electricity generated by the biomass-fired power generation facility and/or electricity from external electricity that supplies electricity to the water electrolyzer.

Since the electricity generated by the biomass-fired power generation facility and the electricity from the external electricity can be prepared in the power storage devices, surplus electricity can be stored, and inexpensive electricity at a midnight rate or the like can be stored and used later.

An operation mode switching assistance method according to a fourteenth aspect of the present disclosure is an operation mode switching assistance method for a fuel production system for producing fuel by combining a biomass-fired power generation facility, a water electrolyzer, and a fuel production reaction device. The operation mode switching assistance method includes: acquiring an electricity selling price of electricity generated by the biomass-fired power generation facility and a fuel selling price of fuel produced by the fuel production system; and controlling switching between an electricity selling mode in which the electricity is sold and a fuel production mode in which the fuel is produced on the basis of a result of comparison between the electricity selling price and the fuel selling price and is executed by a computer.

An operation mode switching assistance program according to a fifteenth aspect of the present disclosure causes a computer to execute the operation mode switching assistance method of the fourteenth aspect.

### Reference Signs List

1: Fuel production system
10: Biomass-fired power generation facility
11: CO2 tank
12: Stack
20: Water electrolyzer
30: FT synthesis device (fuel production reaction device)
40: Biomass
41: Electricity for selling
42: External electricity
50: Operation mode switching assistance device
55: Economic efficiency simulator
60: Information collection device
65: User terminal
1100: CPU
1200: Secondary storage
1300: Main memory
1500: Communication unit
1800: Bus

## Claims

1. An operation mode switching assistance device for a fuel production system for producing fuel by combining a biomass-fired power generation facility, a water electrolyzer, and a fuel production reaction device, wherein
the operation mode switching assistance device
acquires an electricity selling price of electricity generated by the biomass-fired power generation facility and a fuel selling price of the fuel produced by the fuel production system and
controls switching between an electricity selling mode in which the electricity is sold and a fuel production mode in which the fuel is produced on the basis of a result of comparison between the electricity selling price and the fuel selling price.

2. The operation mode switching assistance device according to claim 1, wherein the operation mode switching assistance device compares the electricity selling price with the fuel selling price and performs switching to the electricity selling mode when the electricity selling price is higher.

3. The operation mode switching assistance device according to claim 1, wherein the operation mode switching assistance device compares the electricity selling price with the fuel selling price and performs switching to the fuel production mode when the fuel selling price is higher.

4. The operation mode switching assistance device according to claim 3, wherein when the electricity generated by the biomass-fired power generation facility to be used by the water electrolyzer is insufficient in the fuel production mode, the operation mode switching assistance device supplies electricity from an external electricity to the water electrolyzer.

5. An economic efficiency simulator for a fuel production system for producing fuel by combining a biomass-fired power generation facility, a water electrolyzer, and a fuel production reaction device, wherein
the economic efficiency simulator determines, based on input information including an electricity selling price of electricity generated by the biomass-fired power generation facility and a fuel selling price of the fuel produced by the fuel production system, an electricity selling amount in an electricity selling mode in which the electricity is sold and a fuel production amount in a fuel production mode in which the fuel is produced.

6. The economic efficiency simulator according to claim 5, wherein the input information includes market information including an electricity selling unit price for calculating the electricity selling price and a fuel unit price for calculating the fuel selling price and business operator information.

7. The economic efficiency simulator according to claim 5, wherein the economic efficiency simulator outputs operation mode selection information of the electricity selling mode or the fuel production mode, a process value of the fuel production system including the electricity selling amount and the fuel production amount, and a cost estimation value of the fuel production system.

8. A fuel production system, comprising:
a biomass-fired power generation facility;
a water electrolyzer;
a fuel production reaction device; and
the operation mode switching assistance device according to claim 1, wherein
the fuel production system produces fuel.

9. The fuel production system according to claim 8, comprising a CO2 tank configured to store carbon dioxide generated through electricity generation in the biomass-fired power generation facility.

10. A fuel production system according to claim 9, wherein the fuel production reaction device is fed with the carbon dioxide from the CO2 tank.

11. The fuel production system according to claim 9, comprising a stack configured to discharge a surplus of the carbon dioxide in the CO2 tank to an atmosphere when an amount of the carbon dioxide stored in the CO2 tank reaches an upper limit.

12. The fuel production system according to claim 9, wherein when an amount of the carbon dioxide stored in the CO2 tank reaches an upper limit, the fuel production system stops electricity generation in the biomass-fired power generation facility.

13. The fuel production system according to claim 8, comprising a power storage device configured to store electricity generated by the biomass-fired power generation facility and/or the electricity from external electricity that supplies the electricity to the water electrolyzer.

14. An operation mode switching assistance method for a fuel production system for producing fuel by combining a biomass-fired power generation facility, a water electrolyzer, and a fuel production reaction device,
the operation mode switching assistance method to be executed by a computer comprising:
acquiring an electricity selling price of electricity generated by the biomass-fired power generation facility and a fuel selling price of fuel produced by the fuel production system; and
controlling switching between an electricity selling mode in which the electricity is sold and a fuel production mode in which the fuel is produced on the basis of a result of comparison between the electricity selling price and the fuel selling price.

15. An operation mode switching assistance program causing a computer to execute the operation mode switching assistance method according to claim 14.
